# EUROPÄISCHE PATENTSCHRIFT

(11) **EP 1 874 616 B1**
(45) Veröffentlichungstag und Bekanntmachung des Hinweises auf die Patenterteilung: **10.06.2009**
(21) Anmeldenummer: 06742562.9
(22) Anmeldetag: 11.04.2006
(51) Int. Cl.: B62D 53/08, B62D 53/12, B60S 9/02

(54) **VERFAHREN UND VORRICHTUNG ZUM VOLLAUTOMATISCHEN ABKUPPELN UND ANKUPPELN VON SATTELAUFLIEGERN**
METHOD AND DEVICE FOR COUPLING AND DECOUPLING SEMITRAILERS IN A COMPLETELY AUTOMATIC MANNER
PROCEDE ET DISPOSITIF POUR ATTELER ET DETELER DES SEMI-REMORQUES ENTIEREMENT AUTOMATIQUEMENT

(30) Priorität: 27.04.2005 DE 102005019542
(43) Veröffentlichungstag der Anmeldung: 09.01.2008
(73) Patentinhaber: Daimler AG, 70327 Stuttgart (DE)
(72) Erfinder: PAASCHE, Sascha, 150-0003 Tokyo (JP); SCHWARZHAUPT, Andreas, 76829 Landau (DE); SPIEGELBERG, Gernot, 71296 Heimsheim (DE); SULZMANN, Armin, 68723 Oftersheim (DE)
(74) Vertreter: JENSEN & SON
(86) Internationale Anmeldenummer: PCT/EP2006/003309
(87) Internationale Veröffentlichungsnummer: WO 2006/114197

(56) Entgegenhaltungen:
- EP-A- 0 529 544
- WO-A-20/05108194
- DE-A1- 10 159 503
- PATENT ABSTRACTS OF JAPAN Bd. 2003, Nr. 10, 8. Oktober 2003 (2003-10-08) -& JP 2003 170722 A (NISSAN DIESEL MOTOR CO LTD), 17. Juni 2003 (2003-06-17)

## Beschreibung

Die Erfindung betrifft ein Verfahren zum Abkuppeln eines Sattelaufliegers von einem Zugfahrzeug bzw. zum Ankuppeln des Sattelaufliegers an das Zugfahrzeug, wobei das Abkuppeln des Sattelaufliegers das Absenken zumindest einer Stützeinrichtung des Sattelaufliegers und das Öffnen einer Verriegelung einer Sattelkupplung und das Ankuppeln des Sattelaufliegers das Schließen der Verriegelung der Sattelkupplung und das Anheben der zumindest einen Stützeinrichtung des Sattelaufliegers umfasst, wobei die Verfahrensschritte zum Abkuppeln des Sattelaufliegers durch eine Steuereinrichtung automatisiert durchgeführt werden, wenn eine Betätigungseinrichtung in eine Abkuppelstellung gebracht wird und die Verfahrensschritte zum Ankuppeln automatisch durchgeführt werden, wenn die Betätigungseinrichtung in eine Ankuppelstellung gebracht wird. Ein solches Verfahren ist aus DE 101 59 503 A1 bekannt.

Bei Sattelzügen mit konventionellen Sattelkupplungen müssen nach dem Ankuppeln des Sattelaufliegers an sich die pneumatischen und elektrischen Verbindungen zwischen Zugmaschine und Sattelauflieger hergestellt werden. Dazu muss der Fahrer aussteigen, die pneumatischen Leitungen des Sattelaufliegers mit dem Zugfahrzeug verbinden und danach die elektrischen Leitungen des Sattelaufliegers mit der Zugmaschine verbinden.

Danach muss der Sattelauflieger über die Liftachse leicht angehoben werden. Daraufhin werden die Stützbeine des Sattelaufliegers vom Fahrer mittels einer Handkurbel angehoben.

Aus der WO 01/46001 ist eine mechanische Sattelkupplung bekannt, durch die ein vollautomatisches Auf- und Absatteln möglich wird. Hierbei werden die pneumatischen Leitungen und die elektrischen Leitungen über eine spezielle Steckerverbindung im Königszapfen geführt. Hierdurch wird es möglich, dass die Verbindungen dieser Leitungen automatisch gesteckt werden.

Bei dem eingangs beschriebenen Verfahren muss ein Fahrer des Zugfahrzeugs sein Führerhaus nicht mehr verlassen. Außerdem muss er nicht verschiedene Betätigungseinrichtungen betätigen. Er muss nur eine einzige Betätigungseinrichtung betätigen, damit der Sattelauflieger abgekuppelt bzw. angekuppelt wird. Somit wird das Ankuppeln und Abkuppeln beschleunigt. Für eine Betätigungseinrichtung sind unterschiedliche Ausführungsformen denkbar. Beispielsweise kann die Betätigungseinrichtung als Schalter ausgebildet sein, wobei eine erste Schalterstellung das Abstellen des Sattelaufliegers bewirkt und eine zweite Schalterstellung das Aufnehmen des Sattelaufliegers bewirkt. Weiterhin kann die Betätigungseinrichtung als Taster ausgebildet sein oder zwei Bedienknöpfe aufweisen, wobei einer zur Aufnahme und einer zum Abstellen des Sattelaufliegers betätigt werden kann.

Aufgabe der vorliegenden Erfindung ist es, ein Verfahren zum Abkuppeln und Ankuppeln eines Sattelaufliegers zu schaffen, mit dem ein Sattelauflieger schnell und sicher angekuppelt und abgekuppelt werden kann.

Gelöst wird diese Aufgabe durch ein Verfahren der eingangs genannten Art, bei dem beim zumindest bei einem der Vorgänge "Ankuppeln" oder "Abkuppeln" zumindest der Hinterachsbereich des Zugfahrzeugs über das Fahrniveau angehoben wird. Hierdurch wird der Sattelauflieger vorne leicht angehoben, sodass die Stützeinrichtung entlastet wird. Der Fahrer kann hierdurch beim Ankuppeln im Anschluss an das Anheben weiter zurückfahren, bis der Königszapfen in der Sattelkupplung einrastet, ohne dass die Stützeinrichtung beschädigt wird.

Bei einer bevorzugten Verfahrensvariante kann vorgesehen sein, dass vor Öffnen der Verriegelung das Zugfahrzeug zumindest im Hinterachsbereich zunächst über das Fahrniveau angehoben und danach unter das Fahrniveau abgesenkt wird. Hierdurch kann sichergestellt werden, dass die Verriegelung aktiv ist.

Bei einer weiteren bevorzugten Variante wird nach Öffnen der Verriegelung das Zugfahrzeug zumindest im Hinterachsbereich unter das Fahrniveau abgesenkt. Hierdurch kann, insbesondere wenn der Hinterachsbereich des Fahrzeugs über die Luftfederung bis auf eine Minimalstellung abgesenkt wird, das Zugfahrzeug unter dem Sattelauflieger herausgefahren werden.

Bei einer bevorzugten Variante wird eine Meldung an den Fahrer des Zugfahrzeugs gegeben, wenn die zumindest eine Stützeinrichtung nicht fehlerfrei abgesenkt werden konnte. Dadurch werden Beschädigungen am Fahrzeug und am Sattelauflieger verhindert. Wird die Stützeinrichtung nicht fehlerfrei abgesenkt, so kann der Sattelauflieger nicht sicher abgestellt werden. Vielmehr ist zu befürchten, dass der Sattelauflieger abkippt, wenn das Zugfahrzeug weggefahren wird und/oder die Stützeinrichtung beschädigt wird. Wird dem Fahrer eine entsprechende Meldung gegeben, dass die Stützeinrichtung nicht fehlerfrei abgesenkt werden konnte, kann der Fahrer manuell eingreifen.

Wenn dem Fahrer bei erfolgreichem Abstellen des Sattelaufliegers darüber eine Meldung gemacht wird, kann verhindert werden, dass der Fahrer zu früh versucht, unter dem Sattelauflieger wegzufahren. Dadurch können Beschädigungen am Zugfahrzeug und am Sattelauflieger verhindert werden.

Vorteilhafterweise wird nach erfolgtem Abkuppeln des Sattelaufliegers das Fahrniveau des Zugfahrzeugs wiederhergestellt, insbesondere, wenn das Fahrzeug während des Abkuppelns abgesenkt wurde. Bei einer Weiterbildung kann vorgesehen sein, dass das Fahrniveau erst dann wiederhergestellt wird, wenn nach erfolgtem Abkuppeln eine vorgegebene Zeit vergangen ist oder eine vorgegebene Strecke gefahren wurde. In diesem Fall kann das Fahrniveau automatisch wiederhergestellt werden. Der Fahrer muss nicht selbst daran denken bzw. diesen Vorgang selbst auslösen.

Besonders bevorzugt ist es, wenn bei Betätigen der Betätigungseinrichtung in die Ankuppelposition das Hinterachsniveau unter das Fahrniveau abgesenkt wird. Vorzugsweise erfolgt dies automatisch, so dass sichergestellt wird, dass beim Zurückfahren die Sattelkupplung den Königszapfen des Sattelschleppers umfasst und ein ordnungsgemäßes Ankuppeln des Sattelaufliegers erfolgt. Dabei muss darauf geachtet werden, dass die Sattelkupplung nicht unter das Niveau des unteren Endes des Königszapfens abgesenkt wird. Sonst könnte das Zugfahrzeug zu weit unter den Sattelschlepper fahren. Alternativ ist es denkbar, dass das Zugfahrzeug durch den Fahrer manuell abgesenkt wird.

Vorteilhafterweise wird dem Fahrer des Zugfahrzeugs eine Meldung, dass das Zugfahrzeug zum Aufnehmen des Sattelaufliegers bereit ist, gegeben. Dies kann insbesondere dann erfolgen, wenn die Verriegelung geöffnet wurde und das Zugfahrzeug im Aufnahmebereich abgesenkt wurde. In diesem Zustand ist das Zugfahrzeug bereit, unter den Sattelauflieger zu fahren und den Königszapfen in die Sattelplatte zu bringen. Die Meldung gibt dem Fahrer daher die Auskunft, dass er gefahrlos unter den Sattelauflieger fahren kann.

Bei einer vorteilhaften Variante wird eine Meldung an den Fahrer des Zugfahrzeugs gegeben, wenn durch Anheben zumindest des Hinterachsbereichs des Zugfahrzeugs der Sattelauflieger angehoben wurde. Im Anschluss kann der Fahrer weiter zurückfahren, bis der Königszapfen in der Sattelkupplung einrastet und diese mechanisch verschlossen wird.

Vorteilhafterweise wird nach Schließen der Sattelkupplung zumindest der Hinterachsbereich des Zugfahrzeugs automatisch auf das Fahrniveau gebracht. Dies bedeutet, dass das Zugfahrzeug mit angehängtem Sattelschlepper zur Weiterfahrt bereit ist.

Die Aufgabe wird außerdem gelöst durch eine Vorrichtung zum Abkuppeln und Ankuppeln eines Sattelaufliegers von einem bzw. an ein Zugfahrzeug mit zumindest einer Steuereinrichtung, wobei genau eine Betätigungseinrichtung zum automatisierten Aufnehmen und Abstellen des Sattelaufliegers vorgesehen ist, die mit der Steuereinrichtung in Verbindung steht, wobei die Steuereinrichtung eine Verriegelung einer Sattelkupplung und zumindest eine Stützeinrichtung ansteuert, und wobei eine von der Steuereinrichtung angesteuerte Anhebeinrichtung zum Anheben zumindest eines Hinterachsbereichs des Zugfahrzeugs über das Fahrniveau vorgesehen ist.

Mit einer derartigen Vorrichtung wird das Abkuppeln und Ankuppeln eines Sattelaufliegers erheblich vereinfacht. Ein Fahrzeugführer muss das Fahrzeug zum Ankuppeln und Abkuppeln eines Sattelaufliegers im Normalfall nicht mehr verlassen. Außerdem ist die Bedienung erheblich vereinfacht, da nur eine einzige Betätigungseinrichtung betätigt werden muss. Die Steuereinrichtung kann in einer Fahrzeugsteuereinrichtung, insbesondere einem Steuergerät für einen elektronisch ansteuerbaren Antriebsstrang, integriert sein. Insbesondere kann die Steuereinrichtung bzw. können die Funktionen der Steuereinrichtung in einer Fahrzeugsteuereinrichtung beispielsweise als Softwaremodule implementiert sein. Die Anhebeinrichtung dient dem Anheben des Sattelaufliegers über das Fahrniveau, sodass die Auflieger-Stützbeine entlastet werden. Die Anhebeinrichtung kann auch dazu verwendet werden, den Hinterachsbereich der Zugmaschine wieder auf das Fahrniveau anzuheben, wenn der Hinterachsbereich unter das Fahrniveau abgesenkt wurde, z.B. um das Zugfahrzeug unter den Sattelauflieger zu fahren.

Vorteilhafterweise ist eine von der Steuereinrichtung angesteuerte Absenkeinrichtung zum Absenken des Zugfahrzeugs vorgesehen. Dadurch kann das Zugfahrzeug beim Abkuppeln des Sattelaufliegers unter das Fahrniveau abgesenkt werden, nachdem die Verriegelung der Sattelkupplung geöffnet wurde, und beim Ankuppeln des Sattelaufliegers abgesenkt werden, ehe das Zugfahrzeug unter den Sattelauflieger gefahren wird. Durch diese Maßnahme wird das Ankuppeln und Abkuppeln des Sattelaufliegers vereinfacht.

Ist zumindest ein Drucksensor zur Bestimmung des Drucks auf den Hinterachsbereich vorgesehen, so kann der Druck auf diese Achse (Liftachse) gemessen und bestimmt werden, wann die Achse weit genug angehoben wurde, sodass die zumindest eine Stützeinrichtung des Sattelaufliegers entlastet wird. Hierbei wird ausgenutzt, dass die auf die Liftachse wirkende Masse ansteigt, sobald der Sattelauflieger angehoben wird. Alternativ ist es auch möglich, das Niveau der Hinterachse so weit über das Fahrniveau anzuheben, dass sichergestellt ist, dass die Auflieger-Stützbeine entlastet sind.

Wenn zumindest ein die Stützeinrichtung überwachender Sensor vorgesehen ist, so kann dieser mit einer Signalisierungseinrichtung im Fahrerhaus über die Steuereinrichtung signaltechnisch verbunden sein, so dass dem Fahrer eine Meldung gegeben werden kann, wenn die Stützeinrichtung nicht korrekt betrieben werden konnte. Außerdem kann durch die Signalisierungseinrichtung eine Meldung gegeben werden, wenn das Zugfahrzeug zum Unterfahren des Sattelschleppers bereit ist, d.h. wenn das Zugfahrzeug zumindest im Hinterachsbereich abgesenkt wurde.

Die Steuereinrichtung kann außerdem mit Sensoren zur Bestimmung der Zugfahrzeugsgeschwindigkeit bzw. der zurückgelegten Strecke des Zugfahrzeugs in Verbindung stehen. Wird, nachdem ein Sattelauflieger abgestellt wurde, ein vorgegebener Schwellenwert, d.h. eine vorgegebene Strecke, überschritten, so kann das Fahrzeug selbsttätig wieder auf das Fahrniveau angehoben werden.

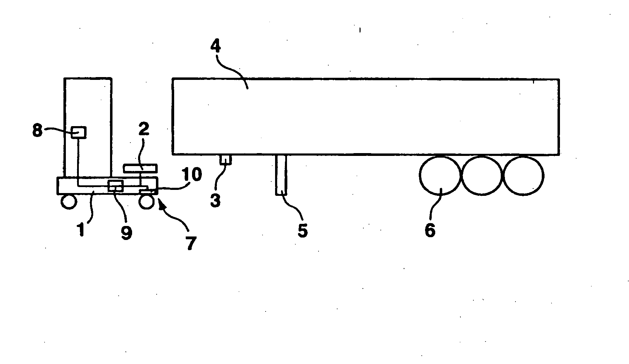

Weitere Merkmale und Vorteile der Erfindung ergeben sich aus der nachfolgenden Beschreibung eines Ausführungsbeispiels der Erfindung, anhand der Figur der Zeichnung, die erfindungswesentliche Einzelheiten zeigt, und aus den Ansprüchen. Die einzelnen Merkmale können je einzeln für sich oder zu mehreren in beliebiger Kombination bei einer Variante der Erfindung verwirklicht sein.

Ein Ausführungsbeispiel ist in der schematischen Zeichnung dargestellt und wird in der nachfolgenden Beschreibung erläutert. Dabei zeigt die einzige
- Figur: eine stark schematisierte Darstellung eines Zugfahrzeugs und eines Sattelaufliegers.

In der Figur ist ein Zugfahrzeug 1, welches als Sattelschlepper ausgebildet ist, gezeigt. Das Zugfahrzeug 1 weist eine Sattelkupplung 2 zur Aufnahme eines Königszapfens 3 eines Sattelaufliegers 4 auf. Der Sattelauflieger 4 ist in einem abgestellten Zustand gezeigt. Dies bedeutet, dass der Sattelauflieger 4 sich durch eine Stützeinrichtung 5 und durch seine Räder 6 abstützt.

Eine Steuereinrichtung 9 des Zugfahrzeugs 1 ist mit einer Betätigungseinrichtung 8 im Fahrerhaus verbunden, die im Ausführungsbeispiel als Schalter ausgebildet ist. Durch eine erste Betätigung der Betätigungseinrichtung 8 können mehrere Verfahrensschritte zum Abstellen des Sattelaufliegers 4 eingeleitet werden. Durch eine zweite Betätigung der Betätigungseinrichtung 8 können Verfahrensschritte zum Aufnehmen des Sattelaufliegers 4 ausgelöst werden.

Weiterhin ist die Steuereinrichtung 9 mit einer Anhebeinrichtung 10 und einer nicht bildlich dargestellten Absenkeinrichtung für einen Hinterachsbereich 7 des Zugfahrzeugs 1 verbunden, die im Ausführungsbeispiel Bestandteil der Luftfederungsanlage sind. Mit der Anhebeinrichtung 10 bzw. der Absenkeinrichtung kann der Hinterachsbereich 7 des Zugfahrzeugs 1 durch die Steuereinrichtung 9 initiiert angehoben bzw. abgesenkt werden. Ein Drucksensor, der ebenfalls mit der Steuereinrichtung 9 in Verbindung steht, überwacht die Anhebeinrichtung 10.

Durch einen weiteren Sensor kann gemessen werden, ob der Hinterachsbereich 7 so weit abgesenkt wurde, dass ein Niveau erreicht ist, das ein Unterfahren des Zugfahrzeugs 1 unter den Sattelauflieger 4 ermöglicht. Da das Absenken des Zugfahrzeugs 1 das Abkuppeln des Sattelaufliegers 4 beim Abstellen des Sattelaufliegers 4 beendet, kann ein entsprechendes Signal durch den Sensor an die Steuereinrichtung 9 gegeben werden, so dass der Steuereinrichtung 9 bekannt ist, dass der Abkuppelvorgang abgeschlossen ist.

Die Steuereinrichtung 9 ist weiterhin mit einer nicht bildlich dargestellten Signalisierungseinrichtung verbunden, durch die Meldungen an den Fahrer abgegeben werden können. Die Signalisierungseinrichtung kann optische, akustische oder kombinierte optische und akustische Signale bzw. Meldungen abgeben. So kann dem Fahrer beispielsweise das Ende des Abkuppelvorgangs angezeigt werden.

Die Steuereinrichtung 9 steht auch mit der Stützeinrichtung 5, die im Ausführungsbeispiel zwei Stützen umfasst, in Verbindung, wenn die Verbindung zwischen Sattelkupplung 2 und Königszapfen 3 geschlossen ist. Durch die Steuereinrichtung 9 kann ein Absenken und Einfahren der Stützeinrichtung 5 bewirkt werden. Das korrekte Ein- und Ausfahren der Stützeinrichtung 5 kann durch Sensoren überwacht werden, die mit der Steuereinrichtung 9 in Verbindung stehen. Tritt ein Fehler beim Absenken der Stützeinrichtung 5 auf, wird dies an die Steuereinrichtung 9 gemeldet und kann eine entsprechende Warnmeldung über die Signalisierungseinrichtung an den Fahrer ausgegeben werden.

Im Zugfahrzeug 1 kann weiterhin eine Entfernungsmesseinrichtung vorgesehen sein, so dass erfasst werden kann, welche Entfernung das Zugfahrzeug 1 nach dem Abstellen des Sattelaufliegers 4 zurückgelegt hat. Wird eine vorgegebene Entfernung überschritten, kann durch die Steuereinrichtung 9 initiiert bzw. gesteuert die Absenkeinrichtung das Zugfahrzeug 1 wieder auf das Fahrniveau anheben.

Beim Beginn des Aufsattel- bzw. Ankuppelvorgangs steht das Zugfahrzeug 1 vor dem Sattelauflieger 4. Der Fahrer drückt einen Knopf "Aufsattelvorgang beginnen" der Betätigungseinrichtung 8 im Fahrerhaus. Daraufhin senkt die Steuereinrichtung 9 den Hinterachsbereich 7 des Zugfahrzeugs 1 auf ein Minimalniveau, d.h. auf ein Niveau unterhalb des Fahrniveaus, um zu verhindern, dass die Sattelkupplung 2 mit dem Sattelauflieger 4 kollidiert. Danach bekommt der Fahrer eine Anzeige, die ihn informiert, dass er nun unter den Sattelauflieger 4 fahren kann.

Um den Aufsattelvorgang fortzusetzen, fährt der Fahrer nun unter den Sattelauflieger 4. Die Steuereinrichtung 9 wartet, bis das Zugfahrzeug 1 wieder steht (alternativ wartet das Zugfahrzeug 1 auf die Bestätigung des Fahrers per Knopfdruck an der Betätigungseinrichtung 8, dass die Sattelkupplung 2 nun unter dem Sattelauflieger 4 platziert ist).

Sobald sichergestellt ist, dass sich das Zugfahrzeug 1 unter dem Sattelauflieger 4 befindet, wird die Hinterachse 7 von der Steuereinrichtung 9 über das Fahrniveau angehoben. Damit wird der Sattelauflieger 4 vorne leicht angehoben, die Stützeinrichtung 5 (Auflieger-Stützbeine) wird entlastet. Durch eine Sensierung des Drucks der Hinterachse (Liftachse) mittels eines Drucksensors kann gemessen werden, wann der Hinterachsbereich 7 weit genug angehoben wurde, da die auf die Liftachse wirkende Masse ansteigt, sobald der Sattelauflieger 4 angehoben wird (alternativ kann das Niveau der Liftachse auch auf eine Höhe eingestellt werden, die so weit über dem Fahrniveau liegt, dass sichergestellt ist, dass der Sattelauflieger 4 angehoben wurde).

Der Fahrer bekommt nachfolgend die Information angezeigt, dass der Sattelauflieger 4 angehoben wurde und er nun weiter zurückfahren kann, woraufhin der Fahrer das Zugfahrzeug 1 so weit zurückfährt, bis der Königszapfen 3 in der Sattelkupplung 2 einrastet und diese mechanisch verriegelt wird.

Nun wird von der Steuereinrichtung 9 die elektrische und pneumatische Verbindung über den Königszapfen 3 hergestellt. Der Fahrer wird über ein Display über den Status der Verbindung informiert. Die Steuereinrichtung 9 wartet so lange, bis genügend Druckluft in den Druckluftleitungen des Sattelaufliegers 4 vorhanden ist, dann wird die Stützeinrichtung 5 hochgefahren. Der Fahrer wird über ein Display über den Status der Stützbeine der Stützeinrichtung 5 informiert. Sind die Stützbeine eingezogen, wird der Fahrer darüber informiert, dass der Kuppelvorgang beendet ist. Die Steuereinrichtung 9 stellt die Hinterachse abschließend auf Fahrniveau, der Aufsattelvorgang ist abgeschlossen.

Vor dem Absattel- bzw. Abkuppelvorgang steht das Zugfahrzeug 1 mit aufgesatteltem Sattelauflieger 4. Der Fahrer drückt einen Knopf an der Betätigungseinrichtung 8, um den Absattelvorgang zu beginnen. Mit dem Drücken des Knopfes bestätigt der Fahrer auch, dass das Absatteln gefahrlos vorgenommen werden kann.

Die Steuereinrichtung 9 stellt die Hinterachse bzw. den Hinterachsbereich 7 nachfolgend auf Fahrniveau. Nachfolgend senkt die Steuerung die Auflieger-Stützbeine der Stützeinrichtung 5 ab. Um die Verriegelung sicherzustellen, wird die Hinterachse des Zugfahrzeugs 7 um einige cm über das Fahrniveau angehoben und danach um einige cm unter das Fahrniveau abgesenkt. Der Fahrer wird über den Zustand informiert.

Nachfolgend wird die Steckverbindung im Königszapfen 3 getrennt. Der Fahrer wird weiter über den Zustand der Verbindung informiert. Die Verriegelung des Königszapfens 3 in der Sattelkupplung 2 wird nachfolgend geöffnet. Der Fahrer bekommt eine Information, dass er nun langsam unter dem Sattelauflieger 4 herausfahren kann. Dabei wird das Heck des Zugfahrzeugs 1 abgesenkt, damit der Sattelauflieger 4 nicht von der Sattelkupplung 2 herunterfällt, sondern sicher auf den Auflieger-Stützbeinen der Stützeinrichtung 5 ruht.

Nachdem das Zugfahrzeug 1 einige Meter gefahren wurde, wird von der Steuereinrichtung 9 der Hinterachsbereich 7 wieder auf Fahrniveau eingestellt. Der Absattelvorgang ist abgeschlossen.

Selbstverständlich können einzelne Schritte im Ablauf sowohl des Ankuppel- als auch des Abkuppelvorgangs manuell vom Fahrer durchgeführt werden, insbesondere falls beim automatischen Durchführen einzelner Schritte Schwierigkeiten auftreten sollten.

## Patentansprüche

1. Verfahren zum Abkuppeln und Ankuppeln eines Sattelaufliegers (4) von einem bzw. an ein Zugfahrzeug (1), umfassend die Verfahrensschritte zum Abkuppeln des Sattelaufliegers (4):
- Absenken zumindest einer Stützeinrichtung (5) des Sattelaufliegers (4),
- Öffnen einer Verriegelung einer Sattelkupplung (2), und die Verfahrensschritte zum Ankuppeln des Sattelaufliegers (4):
- Schließen der Verriegelung der Sattelkupplung (2);
- Anheben der zumindest einen Stützeinrichtung (5) des Sattelaufliegers (4),
wobei die Verfahrensschritte zum Abkuppeln des Sattelaufliegers (4) durch eine Steuereinrichtung (9) automatisiert durchgeführt werden, wenn eine Betätigungseinrichtung (8) in eine Abkuppelstellung gebracht wird, und die Verfahrensschritte zum Ankuppeln automatisch durchgeführt werden, wenn die Betätigungseinrichtung (8) in eine Ankuppelstellung gebracht wird,
**dadurch gekennzeichnet,**
**dass** beim Ankuppeln und/oder beim Abkuppeln zumindest der Hinterachsbereich (7) des Zugfahrzeugs (1) über ein Fahrniveau des Zugfahrzeugs (1) angehoben wird.

2. Verfahren nach Anspruch 1,
**dadurch gekennzeichnet,**
**dass** vor Öffnen der Verriegelung das Zugfahrzeug (1) zumindest im Hinterachsbereich (7) zunächst über das Fahrniveau angehoben und danach unter das Fahrniveau abgesenkt wird.

3. Verfahren nach Anspruch 1 oder 2,
**dadurch gekennzeichnet,**
**dass** nach Öffnen der Verriegelung das Zugfahrzeug (1) zumindest im Hinterachsbereich (7) unter das Fahrniveau abgesenkt wird.

4. Verfahren nach einem der vorhergehenden Ansprüche,
**dadurch gekennzeichnet,**
**dass** eine Meldung an den Fahrer des Zugfahrzeugs (1) gegeben wird, wenn die zumindest eine Stützeinrichtung (5) nicht fehlerfrei abgesenkt werden konnte.

5. Verfahren nach einem der vorhergehenden Ansprüche,
**dadurch gekennzeichnet,**
**dass** bei erfolgreichem Abkuppeln des Sattelaufliegers (4) dem Fahrer eine Meldung darüber gegeben wird.

6. Verfahren nach einem der vorhergehenden Ansprüche,
**dadurch gekennzeichnet,**
**dass** nach erfolgtem Abkuppeln das Fahrniveau des Zugfahrzeugs (1) wiederhergestellt wird.

7. Verfahren nach Anspruch 6,
**dadurch gekennzeichnet,**
**dass** das Fahrniveau wiederhergestellt wird, wenn nach erfolgtem Abkuppeln eine vorgegebene Zeit vergangen ist oder eine vorgegebene Strecke gefahren wurde.

8. Verfahren nach einem der vorhergehenden Ansprüche,
**dadurch gekennzeichnet,**
**dass** bei Betätigen der Betätigungseinrichtung (8) in die Ankuppelposition das Zugfahrzeug (1) zumindest im Hinterachsbereich (7) automatisch unter das Fahrniveau abgesenkt wird.

9. Verfahren nach einem der vorhergehenden Ansprüche,
**dadurch gekennzeichnet,**
**dass** dem Fahrer des Zugfahrzeugs (1) eine Meldung, dass das Zugfahrzeug (1) zum Aufnehmen des Sattelaufliegers (4) bereit ist, gegeben wird.

10. Verfahren nach einem der vorhergehenden Ansprüche,
**dadurch gekennzeichnet,**
**dass** durch Anheben zumindest des Hinterachsbereichs (7) des Zugfahrzeugs (1) der Sattelauflieger (4) angehoben wird, und dass dem Fahrer des Zugfahrzeugs (1) darüber eine Meldung gegeben wird.

11. Verfahren nach einem der vorhergehenden Ansprüche,
**dadurch gekennzeichnet,**
**dass** nach Schließen der Sattelkupplung (2) zumindest der Hinterachsbereich des Zugfahrzeugs (1) automatisch auf das Fahrniveau gebracht wird.

12. Vorrichtung zum Abkuppeln und Ankuppeln eines Sattelaufliegers (4) von einem/an ein Zugfahrzeug (1) mit zumindest einer Steuereinrichtung (9), wobei genau eine Betätigungseinrichtung (8) zum automatisierten Abkuppeln und Ankuppeln des Sattelaufliegers (4) vorgesehen ist, die mit der Steuereinrichtung (9) in Verbindung steht,
wobei die Steuereinrichtung (9) eine Verriegelung einer Sattelkupplung (2) und zumindest eine Stützeinrichtung (5) ansteuert,
**dadurch gekennzeichnet,**
**dass** eine von der Steuereinrichtung (9) angesteuerte Anhebeinrichtung (10) zum Anheben zumindest eines Hinterachsbereichs (7) des Zugfahrzeugs (1) über das Fahrniveau vorgesehen ist.

13. Vorrichtung nach Anspruch 12,
**dadurch gekennzeichnet,**
**dass** eine von der Steuereinrichtung (9) angesteuerte Absenkeinrichtung zum Absenken zumindest des Hinterachsbereichs (7) des Zugfahrzeugs (1) vorgesehen ist.

14. Vorrichtung nach Anspruch 12 oder 13,
**dadurch gekennzeichnet,**
**dass** zumindest ein Drucksensor zur Bestimmung des Drucks auf den Hinterachsbereich (7) vorgesehen ist.

15. Vorrichtung nach einem der Ansprüche 12 bis 14,
**dadurch gekennzeichnet,**
**dass** zumindest ein die Stützeinrichtung (5) überwachender Sensor vorgesehen ist.

16. Vorrichtung nach einem der Ansprüche 12 bis 15,
**dadurch gekennzeichnet,**
**dass** eine Signalisierungseinrichtung, die mit der Steuereinrichtung (9) signaltechnisch verbunden ist, vorgesehen ist.

## Claims

1. Method for decoupling and coupling a semitrailer (4) from or to a tractor vehicle (1), comprising the following process steps for decoupling the semitrailer (4):
- lowering of at least one supporting device (5) of the semitrailer (4),
- releasing a lock of a trailer coupling (2),
and the following process steps for coupling the semitrailer (4):
- closing the lock of the trailer coupling (2),
- raising the at least one supporting device (5) of the semitrailer (4),
such that the process steps for decoupling the semitrailer (4) are carried out automatically by a control device (9) when an actuation device (8) is moved to a decoupling position and the process steps for coupling the semitrailer are carried out automatically when the actuation device (8) is moved to a coupling position,
**characterised in that**
during coupling and/or decoupling, at least the rear axle area (7) of the tractor (1) is raised above a driving level of the tractor (1).

2. Method according to Claim 1,
**characterised in that**
before the lock is released the tractor (1), at least in its rear axle area (7), is first raised above the driving level and then lowered below the driving level.

3. Method according to Claims 1 or 2,
**characterised in that**
when the lock has been released the tractor (1), at least in its rear axle area (7), is lowered below the driving level.

4. Method according to any of the preceding claims,
**characterised in that**
a warning message is sent to the driver of the tractor (1) if it has not been possible to lower the at least one supporting device (5) properly.

5. Method according to any of the preceding claims,
**characterised in that**
the driver is notified by a message when the semitrailer (4) has been successfully decoupled.

6. Method according to any of the preceding claims,
**characterised in that**
after a successful decoupling operation the tractor (1) is returned to its driving level.

7. Method according to any of the preceding claims,
**characterised in that**
the driving level is returned to when, after a successful decoupling operation, a specified time has lapsed or a specified distance has been covered.

8. Method according to any of the preceding claims,
**characterised in that**
when the actuation device (8) is moved to its coupling position the tractor (1) is automatically lowered below the driving level, at least in its rear axle area (7).

9. Method according to any of the preceding claims,
**characterised in that**
the driver of the tractor (1) is notified by a message that the tractor (1) is ready to receive the semitrailer (4).

10. Method according to any of the preceding claims,
**characterised in that**
by raising at least the rear axle area (7) of the tractor (1) the semitrailer (4) is raised, and the driver of the tractor (1) is notified of this by a message.

11. Method according to any of the preceding claims,
**characterised in that**
after closing the trailer coupling (2), at least the rear axle area (7) of the tractor (1) is brought automatically to the driving level.

12. Device for decoupling and coupling a semitrailer (4) from or to a tractor (1) with at least one control device (9), such that exactly one actuation device (8) is provided for the automated decoupling and coupling of the semitrailer (4), the said device being connected to the said control device (9) so that the control device (9) controls the locking of a trailer coupling (2) and at least one supporting device (5),
**characterised in that**
a lifting device (10) actuated by the control device (9) is provided for raising at least a rear axle area (7) of the tractor (1) above the driving level.

13. Device according to Claim 12,
**characterised in that**
a lowering device (10) actuated by the control device (9) is provided for lowering at least a rear axle area (7) of the tractor (1).

14. Device according to Claims 12 or 13,
**characterised in that**
at least one pressure sensor is provided to determine the pressure on the rear axle area (7).

15. Device according to any of Claims 12 to 14,
**characterised in that**
at least one sensor that monitors the supporting device (5) is provided.

16. Device according to any of Claims 12 to 15,
**characterised in that**
a signalling device that is in signalling connection with the control device (9) is provided.

## Revendications

1. Procédé pour dételer et atteler une semi-remorque (4) d'un et / ou à un véhicule tracteur (1), comprenant les étapes du procédé pour dételer la semi-remorque (4) consistant à :
- abaisser au moins un dispositif de support (5) de la semi-remorque (4)
- ouvrir un dispositif de verrouillage d'une sellette d'attelage (2). Les étapes du procédé pour atteler la semi-remorque (4) consistent à :
- fermer le dispositif de verrouillage de la sellette d'attelage (2),
- relever au moins un dispositif de support (5) de la semi-remorque (4), et les étapes du procédé pour atteler la semi-remorque (4) consistant à :
- fermer le dispositif de verrouillage de la sellette d'attelage (2),
- relever au moins un dispositif de support (5) de la semi-remorque (4), les étapes du procédé pour dételer la semi-remorque (4) étant exécutées automatiquement par un dispositif (9) de commande, lorsqu'un dispositif d'actionnement (8) est mis dans la position de dételage, et les étapes du procédé pour atteler étant exécutées automatiquement lorsque le dispositif (8) d'actionnement est mis dans une position d'attelage, **caractérisé en ce que** lors de l'attelage et / ou du dételage au moins la zone de pont arrière (7) du véhicule tracteur (1) est relevée au-dessus du niveau de marche du véhicule tracteur (1).

2. Procédé selon la revendication 1, **caractérisé en ce qu'**avant l'ouverture du dispositif de verrouillage, le véhicule tracteur (1) au moins dans la zone du pont arrière (7) est d'abord relevé au-dessus du niveau de marche et ensuite abaissé au-dessous du niveau de marche.

3. Procédé selon la revendication 1 ou 2, **caractérisée en ce qu'**après l'ouverture du dispositif de verrouillage, le véhicule tracteur (1) au moins dans la zone du pont arrière (7) est abaissé au-dessous du niveau de marche.

4. Procédé selon l'une quelconque des revendications précédentes, **caractérisé en ce que** le conducteur du véhicule tracteur (1) est averti lorsqu'au moins un dispositif de support (5) a pu être abaissé sans défaut.

5. Procédé selon l'une quelconque des revendications précédentes, **caractérisé en ce que** le conducteur est averti que le dételage de la semi-remorque (4) a été effectué avec succès.

6. Procédé selon l'une quelconque des revendications précédentes, **caractérisé en ce qu'**après le dételage réussi, le niveau de marche du véhicule tracteur (1) est rétabli.

7. Procédé selon la revendication 6, **caractérisé en ce que** le niveau de marche est rétabli lorsqu'après le dételage réussi un délai défini s'est écoulé ou qu'un trajet prédéfini a été effectué.

8. Procédé selon l'une quelconque des revendications précédentes, **caractérisé en ce que** lors de l'actionnement du dispositif d'actionnement (8) dans la position d'attelage, le véhicule tracteur (1) au moins dans la zone du pont arrière (7) est abaissé automatiquement au-dessous du niveau de marche.

9. Procédé selon l'une quelconque des revendications précédentes, **caractérisé en ce que** le conducteur d'un véhicule tracteur (1) est averti lorsque le véhicule tracteur (1) est prêt à recevoir la semi-remorque (4).

10. Procédé selon l'une quelconque des revendications précédentes,
**caractérisé en ce que** la semi-remorque (4) est soulevée par le soulèvement au moins de la zone de pont arrière (7) du véhicule tracteur (1) et **en ce que** le conducteur du véhicule tracteur (1) en est averti.

11. Procédé selon l'une quelconque des revendications précédentes, **caractérisé en ce qu'**après la fermeture de la sellette d'attelage (2) au moins la zone du pont arrière du véhicule tracteur (1) est amenée automatiquement au niveau de marche.

12. Dispositif pour atteler et dételer une semi-remorque (4) à / d'un véhicule tracteur (1) avec au moins un dispositif de commande (9), plus particulièrement un dispositif d'actionnement (8) pour le dételage et l'attelage automatique d'une semi-remorque (4) étant prévu, qui est relié au dispositif de commande (9), le dispositif de commande (9) commandant un dispositif de verrouillage d'une sellette d'attelage (2) et au moins un dispositif de support (5), **caractérisé en ce qu'**un dispositif de soulèvement (10) commandé par le dispositif de commande (9) est prévu pour soulever au moins une zone de pont arrière (7) du véhicule tracteur (1) au-dessus du niveau de marche.

13. Dispositif selon la revendication 12, **caractérisé ce qu'**un dispositif d'abaissement (10) commandé par le dispositif de commande (9) est prévu pour abaisser au moins la zone de pont arrière (7) du véhicule tracteur (1).

14. Dispositif selon la revendication 12 ou 13, **caractérisé en ce qu'**au moins un capteur de pression est prévu pour déterminer la pression dans la zone du pont arrière (7).

15. Dispositif selon l'une quelconque des revendications 12 à 14, **caractérisé en ce qu'**au moins un capteur de surveillance du dispositif de support (5) est prévu.

16. Dispositif selon l'une quelconque des revendications 12 à 15, **caractérisé en ce qu'**un dispositif de signalisation, qui est relié au dispositif de commande (9) par technique de signalisation, est prévu.
